# EUROPEAN PATENT APPLICATION

(11) **EP 2 063 387 A1**
(43) Date of publication of application: **27.05.2009**
(21) Application number: 08006305.0
(22) Date of filing: 31.03.2008
(51) Int. Cl.: G06Q 30/00

(54) **Systems and methods for a biddable multidimensional marketplace for advertising on a wireless communication device**

(30) Priority: 15.11.2007 US 941035
(71) Applicant: Qualcomm Incorporated, San Diego, CA 92121-1714 (US)
(72) Inventor: Maggenti, Mark c/o QUALCOM Incorporated, San Diego CA92121-1714 (US); Elliot, John c/o QUALCOM Incorporated, San Diego CA92121-1714 (US); Coyer, James D. c/o QUALCOM Incorporated, San Diego CA92121-1714 (US); Crockett, Douglas Marion c/o QUALCOM Incorporated, San Diego CA92121-1714 (US)
(74) Representative: Heselberger, Johannes

(57) **Abstract**

Systems, methods and apparatus for a multidimensional bidding marketplace for providing advertising content to wireless devices. In particular, aspects allows advertising providers, to define and/or identify a one or more wireless device-based transient factors from a plurality of factors, which serve to define a targeted advertising audience and to bid on advertising based on the selected or identified transient factors.

## Description

### BACKGROUND

### Field

The described aspects relate to wireless communication, and more particularly, to methods, systems and apparatus for a biddable marketplace for advertising on a wireless communication device.

### Background

Wireless communication networks have been designed to deliver media content to recipients. For example, wireless communication networks may comprise a broadcast or multicast system, which transmit information to multiple recipients at the same time. One example of such a system is the MediaFLO™ media distribution system, available from QUALCOMM Incorporated of San Diego, California. In addition to delivering broadcast programming, these types of media distribution systems are especially suited for delivering advertising media content, otherwise referred to as advertisements or ads, to wireless communication devices, such as cellular telephones and the like.

In many instances advertisers desire to present their respective advertising media content to specific target audiences. For example, the advertiser may desire to target a certain gender, age group, income range and the like. In terms of wireless communication networks, such user-related information is typically accessible through user profiles that are maintained at the network level and/or at the wireless device level.

In addition to defining a target audience based on more permanent user-related information, such as age, gender and the like, advertisers may desire to target audiences based on wireless-device factors that are transient in nature. Transient factors may include any factor related to the wireless device or the user that is viewed as less than permanent. For example, transient factors may include the geographic location of the wireless device, the direction in which the wireless device is moving and the like. For example, an advertiser may want to target all of the shoppers at a mall, all of the spectators at a sporting event or individuals moving in the direction of the beach. To accommodate the desire to know the wireless device's geographic location, more and more wireless devices are being equipped with means to determine geographical location, such as devices equipped with Global Positioning System (GPS) capability and the like. In addition, other transient factors may include a particular time of day, time of week, time of month, etc in which advertisers desire to provide adverting. Also, transient factors may include the current configuration of the wireless device, applications or network services used by the wireless device and the like.

Advertisers realize that being able to provide their advertising to a targeted audience provides more value and overall benefit than just providing generic advertising to the overall wireless device population. This is value that the advertisers are more than willing to pay for in terms of increased advertising cost.

From the service provider standpoint, the service provider may have access to a large demographic of wireless devices and the ability to provide media content and, specifically, advertising, to these wireless devices through broadcast/multicast media content distribution and the like. While the service providers may be capable of providing advertisers with useful information, such as user profile information, transient wireless-based factors and the like, which may be used to define a target advertising audience, the service providers typically are unable to define the value of the targeted advertising, in terms of deciding what price to charge the advertiser for the targeted advertisements. This valuation problem becomes heightened when two or more advertisers desire the same target audience simultaneously. In the wireless network model, this problem is exasperated due to the transitory nature of the wireless devices. For example, in the instance in which the target audience is spectators at a sporting event, the target audience is fleeting and, in some instances may be impromptu.

Current known advertising marketplaces that provide for the advertisers to determine the value of the advertisement are limited to a single dimension. For example, Internet-based search engines, provide a marketplace that allows advertisers to bid on a particular keyword or search word. In this regard, if a user inputs the keyword in the search engine, the advertiser that has generally bid or paid the most will be afforded advertising space or provided highest priority within a listing of advertisers. However, this type of marketplace is single dimensional, in that, it only takes into account a single factor; the keyword or search word inputted by the user. It does not provide for the advertising providers to define multiple dimensions or to value the advertisement based on the multiple dimensions.

Therefore, a need exists to develop a system that provides for targeted advertising on a wireless device. Such a system should allow media advertising providers the ability to target the delivery of their media content to only those wireless devices and/or wireless device users that meet their defined plurality of wireless device factors, which in some instances may be transient wireless device factors. By allowing for the advertising providers to define multiple wireless device factors and to value the advertising based on the multiple wireless device factors, the desired advertising marketplace becomes multi-dimensional. Additionally, the desired system should allow the advertising providers to place a value on their defined multiple wireless device factors, such that they only pay an advertising rate that is in agreement with the value they place on the wireless device factors. From the service provider perspective, the desired system should allow for two or more advertisers desiring to provide advertisements for the same target audience as defined by the wireless device factors, to dictate the price of the advertising. In this regard, the advertiser that places the highest or optimal value on the wireless device factors and is willing to pay a premium is typically granted access to the targeted audience and the service provider achieves maximum profit.

### SUMMARY

The following presents a simplified summary of one or more aspects in order to provide a basic understanding of such aspects. This summary is not an extensive overview of all contemplated aspects, and is intended to neither identify key nor critical elements of all aspects nor delineate the scope of any or all aspects. Its sole purpose is to present some concepts of one or more aspects in a simplified form as a prelude to the more detailed description that is presented *infra.*

Thus, present aspects provide systems, methods and apparatus for a biddable multidimensional marketplace for providing advertising on a wireless device. In particular, present aspects provide for a bidding system implemented by service providers that allows advertising providers to define or identify one or more wireless-device-based transient factors from amongst a plurality of factors and to bid on advertising associated with the defined wireless device-based transient factors.

The described aspects provide advertisers providers the ability to target the delivery of their advertisements to only those wireless devices and/or wireless device users that meet their defined wireless device-based transient factors. Additionally, the bidding system allows the advertising providers to place a value on and define the advertising rate and, in some aspects, the quantity of advertisements (i.e., the number of views or impressions for a specific advertisement) based on their defined or identified wireless device-based transient factors.

According to one aspect, a method for auctioning advertising on a wireless communication device is defined. The method includes receiving one or more bids for providing advertising content to a plurality of wireless devices. The bids are based on at least one of a plurality of wireless device-based transient factors and include a bid limit. The bid limit may be defined as a specified price for a specified number of advertising impressions or views. The method also includes applying selection criteria according to a predetermined optimization function for each of the one or more bids, selecting acceptable ones of the one or more bids based on the corresponding selection criteria and storing a bid selection record of the one or more selected bids.

The plurality of wireless device-based transient factors may include any non-permanent factor related to the wireless device or the wireless device user. For example, the wireless device-based transient factors may include, but are not limited to, wireless device configuration, wireless device location, predicted future wireless device location, time of day, time of week, time of month, time of year, application being executed, service being accessed, temporal user demographics, temporal user profile, and/or temporal user inferences. In addition to wireless device transient factors, the bids may include wireless device-based non-transient factors that include any permanent factor related to the wireless device or the wireless device user. For example, wireless device-based non-transient factors may include, wireless device type/model, user demographics, user profile, user usage history and the like.

The method may further include providing a plurality of bidders a network platform that includes a plurality of wireless device-based transient factors and, optionally, one or more wireless device-based non-transient factors. The network platform additionally provides for the bidders to input a bid for providing advertising content based on the plurality of wireless device-based transient factors and, optionally, the one or more wireless device-based non-transient factors. In such aspects, the network platform may provide for the bidders to input a bid based on the selection of at least one of the plurality of wireless device-based transient factors. In alternate aspects, the network platform may identify a plurality of wireless device-based transient factors associated with one or more selectable advertising categories. The selectable advertising categories may include, but are not limited to, a predetermined time slot, a predetermined network service, such as a broadcast/multicast service or the like and a predetermined application.

In some aspects of the method, applying selection criteria according to a predetermined optimization function for each of the one or more bids may include optimizing each of the bids over at least one wireless device-based transient factor field, wireless-based non-transient factor field or a predetermined period of time to determine which ones of the one or more bids to accept.

A further related aspect is provided for by at least one processor configured to receive bids for providing advertising content to wireless devices and determine which bids to accept. The at least one processor includes a first module for receiving one or more bids for providing advertising content to a plurality of wireless devices. The bids are based on at least one of a plurality device-based transient factors and include a bid limit. The at least one processor additionally includes a second module for applying selection criteria according to a predetermined optimization function for each of the one or more bids, a third module for selecting acceptable ones of the one or more bids based on the corresponding selection criteria and a fourth module for storing a bid selection record of the one or more selected bids.

Another related aspect is defined by a computer program product including a computer-readable medium. The medium includes at least one instruction for causing a computer to receive one or more bids for providing advertising content to a plurality of wireless devices. The bids are based on at least one of a plurality device-based transient factors and include a bid limit. The medium additionally includes at least one instruction for causing the computer to apply selection criteria according to a predetermined optimization function for each of the one or more bids and at least one instruction for causing the computer to select acceptable ones of the one or more bids based on the corresponding selection criteria. The medium also includes at least one instruction for causing the computer to store a bid selection record of the one or more selected bids.

Yet another related aspect is defined by an apparatus. The apparatus includes means for receiving one or more bids for providing advertising content to a plurality of wireless devices. The bids are based on at least one of a plurality wireless device-based transient factors and include a bid limit. The apparatus also includes means for applying selection criteria according to a predetermined optimization function for each of the one or more bids, means for selecting acceptable ones of the one or more bids based on the corresponding selection criteria and means for storing a bid selection record of the one or more selected bids.

Another aspect is defined by a network device for managing a biddable marketplace for advertising on a wireless communication device. The network device includes a computer platform including at least one processor and a memory; and an advertising bidding module stored in the memory and executable by the at least one processor. The advertising bidding module includes a bid receiver operable to receive one or more bids for providing advertising content to a plurality of wireless device. The bids are based on at least one of a plurality wireless device-based transient factors and include a bid limit. The bid limit may be defined as a specified price for a specified number of advertising impressions or views. The advertising bidding module additionally includes one or more optimization functions operable to apply selection criteria to each of the one or more bids, a bid selector operable to select acceptable ones of the one or more bids based on the corresponding selection criteria, and a selected bid storage operable to store a bid selection record of the one or more selected bids.

The plurality of wireless device-based transient factors may include any non-permanent factor related to the wireless device or the wireless device user. For example, the wireless device-based transient factors may include, but are not limited to, wireless device configuration, wireless device location, predicted future wireless device location, time of day, time of week, time of month, time of year, application being executed, service being accessed, temporal user demographics, temporal user profile, and/or temporal user inferences. In addition to wireless device transient factors, the bids may include wireless device-based non-transient factors that include any permanent factor related to the wireless device or the wireless device user. For example, wireless device-based non-transient factors may include, wireless device type/model, user demographics, user profile, user usage history and the like.

The network device may further comprise a bidding platform module stored in the memory and executable by the processor. The bidding platform module is operable to provide a bidding platform for bidder selection of at least one of the plurality device-based transient factors and, optionally, one or more device-based non-transient factors. In addition, the bidding platform module is operable to provide for input of the bid limit associated with the selected factors. In this regard, the advertising providers (i.e., bidding party) may access the bidding platform to select the wireless device-based transient factors and, optionally wireless device-based non-transient factors from a listing or such and inputs a bid limit associated with the selected factors. In another aspect the network device may include a bidding platform operable to provide a bidding platform that provides for identification of the plurality of wireless device-based transient factors and, optionally, one or more wireless device-based non-transient factors associated with at least one selectable advertising category. The selectable advertising category may include, but is not limited to, a predetermined time slot, a predetermined network service, a predetermined application or the like. In this regard, the advertising providers (*i.e.,* bidding party) access the bidding platform to identify (*i.e*., input) a plurality of wireless device-based transient factors and, optionally, wireless device-based non-transient factors associated with at least one selectable advertising category.

In one aspect the optimization functions may be further operable to optimize each of the bids over a predetermined period of time to determine which of the one or more bids to accept and, in alternate aspects, the optimization functions are further operable to optimize each bid over at least one of the plurality of wireless device-based transient factor fields and/or one of the wireless device-based non-transient factor fields to determine which ones of the one or more bids to accept. In another aspect a method is defined for allocating advertising content on a wireless communication device. The method additionally includes receiving, at a wireless device, one or more bids for providing advertising content to the wireless devices. The bids are based on at least one of a plurality of transient factors associated with the wireless device and include a bid limit. The method additionally includes applying, at the wireless device, selection criteria according to a predetermined optimization function for each of the one or more bids, selecting, at the wireless device, one or more acceptable bids based on the corresponding selection criteria and storing, at the wireless device, a bid selection record of the one or more selected bids.

A further aspect is provided for by at least one processor implemented at a wireless device and configured to receive bids for providing advertising content to the wireless devices. The processor(s) includes a first module for receiving one or more bids for providing advertising content to the wireless device. The bids are based on at least one of a plurality device-based transient factors and include a bid limit. The processor(s) additionally includes a second module for applying selection criteria according to a predetermined optimization function for each of the one or more bids, a third module for selecting one or more acceptable bids based on the corresponding selection criteria and a fourth module for storing a bid selection record of the one or more selected bids.

Yet another aspect is defined by a computer program product that includes a computer-readable medium. The medium includes at least one instruction for causing a computer to receive, at a wireless device, one or more bids for providing advertising content to the wireless device. The bids are based on at least one of a plurality device-based transient factors and include a bid limit. The medium additionally includes at least one instruction for causing the computer to apply, at the wireless device, selection criteria according to a predetermined optimization function for each of the one or more bids, at least one instruction for causing the computer to select, at the wireless device, one or more acceptable bids based on the corresponding selection criteria and at least one instruction for causing the computer to store a bid selection record of the one or more selected bids.

Another related aspect is provided for by a wireless device apparatus. The apparatus includes means for receiving, at the wireless device, one or more bids for providing advertising content to the wireless device apparatus. The bids are based on at least one of a plurality wireless device-based transient factors and include a bid limit, The apparatus additionally includes means for applying, at the wireless device, selection criteria according to a predetermined optimization function for each of the one or more bids, means for selecting, at the wireless device, one or more acceptable bids based on the corresponding selection criteria and means for storing, at the wireless device, a bid selection record of the one or more selected bids.

A wireless device for implementing a biddable marketplace for advertising on a wireless communication device defines a further aspect. The wireless device includes a computer platform including at least one processor and a memory. The wireless device further includes an advertising bidding module stored in the memory and executable by the at least one processor. The advertising bidding module includes a bid receiver operable to receive one or more bids for providing advertising content for the wireless device. The bids are based on at least one of a plurality wireless device-based transient factors and include a bid limit. The advertising bidding module further includes one or more optimization functions operable to apply selection criteria to each of the one or more bids, a bid selector operable to select acceptable ones of the one or more bids based on the corresponding selection criteria, and a selected bid storage operable to store a bid selection record of the one or more selected bids.

Thus, present aspects provide systems, methods and apparatus for multidimensional marketplace for providing advertising content to wireless device. In particular the systems, methods and apparatus allow advertising providers, to define and/or identify one or more wireless device-based transient factors, which serve to define a targeted advertising audience and to bid on advertising based on the selected or identified transient factors.

### BRIEF DESCRIPTION OF THE DRAWINGS

The disclosed aspects will hereinafter be described in conjunction with the appended drawings, provided to illustrate and not to limit the disclosed aspects, wherein like designations denote the elements, and in which:

Fig. 1 is a schematic diagram of a system for a multidimensional bidding marketplace for providing advertising to wireless devices, according to an aspect;

Fig. 2 is a block diagram of a system for a multidimensional bidding marketplace for providing advertising to wireless devices, according to an aspect;

Fig. 3 is a schematic diagram providing an example of the procedure for determining biddable advertising based on an overlap of defined wireless device-based transient factors, according to another aspect;

Fig. 4 is a schematic diagram providing an example of the optimization bids over a predetermined time interval, according to another aspect;

Fig. 5A is a block diagram representation of a network platform for inputting bids including selectable wireless-device transient factors, according to an aspect;

Fig. 5B is a block diagram representation of the network platform of Fig. 5A illustrating a submitted bid, according to an aspect;

Fig. 6A is a block diagram representation of a network platform for inputting bids including selectable wireless-device transient factors associated with a date, time, channel/program, according to an aspect;

Fig. 6B is a block diagram representation of the network platform of Fig. 6A illustrating a submitted bid, according to an aspect;

Fig. 7A is a block diagram representation of a network platform for inputting bids including identified wireless-device transient factors associated with a date, time, channel/program, according to an aspect;

Fig. 7B is a block diagram representation of the network platform of Fig. 7A illustrating a submitted bid, according to an aspect;

Fig. 8A is a block diagram representation of a network platform for inputting bids including identified and selectable wireless-device transient factors associated with a date, time, channel/program, according to an aspect;

Fig. 8B is a block diagram representation of the network platform of Fig. 8A illustrating a submitted bid, according to an aspect;

Fig. 9 is a block diagram of a network device operable for providing a multidimensional bidding marketplace to advertising providers, according to an aspect;

Fig. 10 is a block diagram of a wireless device operable for providing a multidimensional bidding marketplace to advertising providers, according to an aspect;

Fig. 11 is a flow diagram of a method for receiving advertising bids from advertising providers and determining which bids to select, according to an aspect;

Fig. 12 is a flow diagram of a means for receiving advertising bids from advertising providers and determining which bids to select, according to an aspect.

### DETAILED DESCRIPTION

The present devices, apparatus, methods, computer-readable media and process ors now will be described more fully hereinafter with reference to the accompanying drawings, in which aspects of the invention are shown. The devices, apparatus, methods, computer-readable media and processors may, however, be embodied in many different forms and should not be construed as limited to the aspects set forth herein; rather, these aspects are provided so that this disclosure will be thorough and complete, and will fully convey the scope of the invention to those skilled in the art. Like numbers refer to like elements throughout.

The various aspects described herein are in connection with a wireless communication device. A wireless communication device may also be called a subscriber station, a subscriber unit, mobile station, mobile, remote station, access point, remote terminal, access terminal, user terminal, user agent, a user device, or user equipment. A subscriber station may be a cellular telephone, a cordless telephone, a Session Initiation Protocol (SIP) phone, a wireless local loop (WLL) station, a personal digital assistant (PDA), a handheld device having wireless connection capability, or a device connected to a wireless modem. Additionally, the wireless communication device may be a broadcast-only client, such as a personal media player, vehicular media player or the like.

Present aspects provide systems, methods and apparatus for a multidimensional bidding marketplace. More particularly, a bidding marketplace implemented by service providers to allow advertising providers to define multiple wireless device-based transient factors, which define a targeted audience, and to bid for providing advertising content based on the defined multiple wireless device-based transient factors. As used herein, "providing advertising content" includes delivering advertising content to the wireless devices and presenting the content on the wireless device. In addition, in some aspects in which the advertising content may already reside in wireless device accessible storage, "providing advertising content" may include accessing the stored advertising content and presenting the content on the device. The advertising content may be video content, audio content, multimedia content or the like and, thus, presentation may include visual presentation, audio presentation, multimedia presentation or the like.

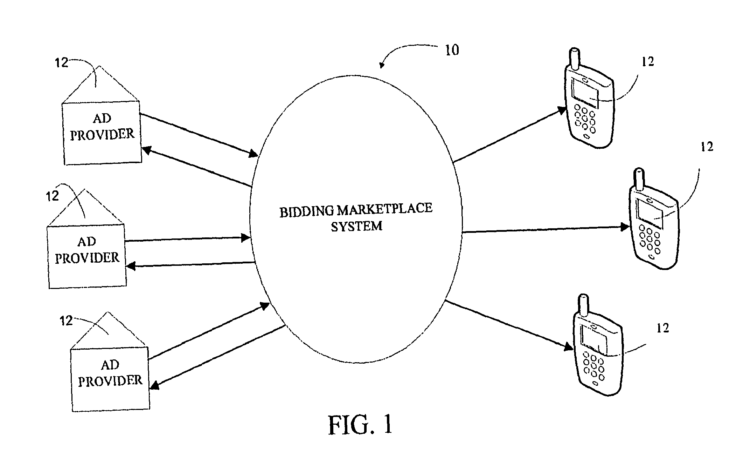

Fig. 1 provides a high-level schematic overview of a multidimensional bidding system for providing advertising to wireless devices, according to an aspect. The multidimensional bidding system **10** is implemented in a distributed computer network and may comprise one or more network devices and associated databases. The bidding system is in network communication with multiple potential advertising providers **12**. In accordance with present aspects, the advertising providers **12** may desire to target advertising to a specific audience based on selected or identified wireless device-based transient factors and, optionally, selected or identified wireless-device-based non-transient factors. Wireless device-based transient factors may include, but are not limited to, device configuration, device location, predicted future device location, time of day, time of week, time of month, time of year, application being executed, service being accessed, temporal user demographics, temporal user profile, and/or temporal user inferences. Wireless device-based non-transient factors may include, but are not limited to, device type/model, user demographics, user profile, user usage history, user inferences and the like.

In one aspect, the bidding system **10** may utilize the Internet, or any other network, as a communication medium between the system and the advertising providers **12**. In such aspects, the bidding system **10** provides information to the advertising providers, via an Internet website or other network interface, that allows the advertising providers **12** to place bids for providing advertising based on one or more of a plurality of wireless device-based transient factors and, optionally, one or more wireless device non-transient factors.

In one aspect, the advertising provider may select from among a plurality of wireless device-based transient factors and, optionally one or more wireless device-based non-transient factors to define the target advertising audience and to bid based on the selected wireless device-based transient factors and, optionally non-transient factors. In an alternate aspect, the advertising provider may select from among a plurality of wireless device-based transient factors and optionally, non-transient factors, associated with a time/date, a service (such as, a channel, a program or the like) or the like to define the target advertising audience for the date/time, service or the like. In other aspects, the advertising provider may be presented with a date/time, service (such as, a channel, a program or the like) or the like and the historical wireless device-based transient factors and, optionally, non-transient factors, associated with the time/date and/or service. In turn, the advertising provider **12** may bid for providing advertising for the time/date and/or service based on the identified historical wireless device-based transient factors and, optionally wireless device-based non-transient factors. In yet a further aspect, the advertising provider may be presented with a date/time, service (such as, a channel, a program or the like) or the like, the historical wireless device-based transient factors and, optionally non-transient factors, associated with the time/date and/or service and may select from among a plurality of wireless device-based transient factors and, optionally, non-transient factors, associated with a time/date, a service (such as, a channel, a program or the like) or the like to define the target advertising audience for the date/time, service or the like.

The bidding system **10** receives bids from a plurality of advertising providers 12 and applies selection criteria to each bid according to a predetermined optimization function. Based on the application of the selection criteria, the bidding system **10** selects one or more acceptable bids and stores a record of the acceptable bids in system storage. An acceptable bid may be any bid that allows the service provider, such as a broadcast or multicast service provider, to maximize their profits. It should be noted that the system may provide for accepting more than one bid for any one time/date period and or service/program based on the defined wireless device-based transient factors, optional non-transient factors and bid limit/number of desired impressions/views prescribed in the bids. Additionally, an acceptable bid is not necessarily equivalent to the highest bid amount, as the selection criteria within the optimization function may take into account other factors, such as a bidders overall advertising acquisition history (i.e., priority status) or the like.

The bidding system **10** may provide for any known type of bidding system for bidding on providing advertising content based on wireless device-based transient factors. For example, a timed auction, a sealed bid auction, a dutch or reverse bid auction or the like may be implemented by the bidding system **10**.

Based on the bids received from the advertising providers **12**, the bidding system **10** will determine acceptable bids, and designate the acceptable bidder as a provider of advertising content for the designated time/date and/or channel/program and/or for the selected wireless device-based transient factors and, optionally selected wireless device-based non-transient factors. Once the bid has been accepted, the advertising provider may provide advertising or the like, to the wireless devices **14** associated with the wireless device-based transient factors and, optionally non-transient factors.

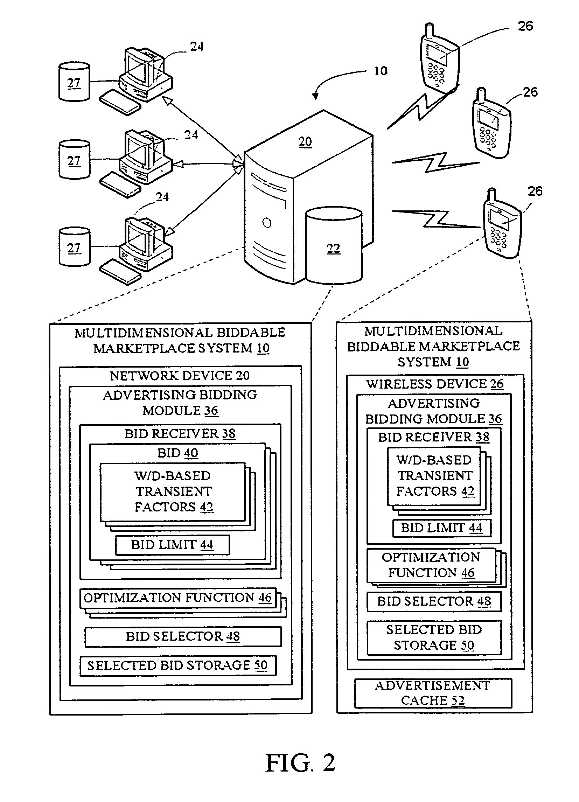

Fig. 2 provides a block diagram of a multidimensional bidding system for providing advertising content to wireless devices, according to aspect. The system **10** includes one or more network devices **20**, such as servers or the like, and corresponding databases **22**. For the sake of clarity, the system shown in Fig. 2 is limited to a single network device **20** and database **22**, although certain aspects may include multiple network devices **20** and/or databases **22**. Additionally, databases **22** may be separate entities or they may be databases included within any of the one or more network devices **20**. The network device is in either wired or wireless communication with a plurality of computing devices **24**, wherein each computing device is in control of an advertising provider **12** (not shown in Fig. 2). The computing device **24** is in communication with content databases **27** that store content that advertising providers desire to provide to wireless device assets. Additionally, the network device **20** is in communication, generally at least partially in wireless communication, with wireless devices **24**.

Each network device **20** includes an advertising bidding module **36** operable to receive bids from advertising providers **12**, apply selection criteria to the received bids according to a predetermined optimization function, select acceptable bids based on the corresponding selection criteria and store a record of the selected bids in designated storage.

As such, the advertising bidding module **36** includes a bid receiver **38** operable to receive, from the advertising providers **12**, a bid **40** based on one or more of a plurality of wireless device-based transient factors **42** and including a bid limit **44**. The bid limit may be defined as a specified price for a specified number of advertising impressions/views. The wireless device-based transient factors may include, but are not limited to, wireless device configuration, wireless device location, predicted future wireless device location, time of day, time of week, time of month, time of year, application being executed, service being accessed, temporal user demographics, temporal user profile, and/or temporal user inferences.

The advertising bidding module **36** additionally includes one or more optimization functions **46** operable to apply selection criteria to each of the received bids **40** according to the predetermined optimization function. Selection criteria may be based on the bid amount, the number of desired impressions/views, the set of wireless device-based transient factors, the priority status of the bidder and the like. Additionally, the advertising bidding module **36** includes bid selector **48** operable to select one or more bids based on the selection criteria. As previously noted, the system may provide for selecting multiple bids for the same advertising category, such as the same time/date, the same channel/program or the like in order to maximize profits. The advertising bidding module **36** also includes selected bid storage operable to store a selected bid record for each bid that is selected for providing advertising to wireless devices.

As additionally shown in Fig. 2, in alternate aspects, the multidimensional biddable marketplace system **10** may be a wireless device-based system or partially based at the wireless device. It such aspect, the wireless device **26** may be configured to receive the bids, apply an optimization function and select one or more of the bids for advertisement presentation based on the optimization function. In such aspects, selection of advertisements may be specific to the device and, as such, specific to the transient factors associated with the device and, optionally, the non-transient factors associated with the device.

In such aspects, one or more of the wireless devices **26** may be configured to include advertising bidding module **36** operable to receive bids from advertising providers **12**, apply selection criteria to the received bids according to a predetermined optimization function, select acceptable bids based on the corresponding selection criteria and store a record of the selected bids in designated storage.

Similar to the advertising module **36** depicted and shown in relation to network device **20**, the advertising bidding module **36** stored and executed on the wireless device **26** may include a bid receiver **38** operable to receive, from the advertising providers 12, a bid **40** based on one or more of a plurality of wireless device-based transient factors **42** and including a bid limit **44**.

The advertising bidding module **36** on wireless device **26** may additionally include one or more optimization functions **46** operable to apply selection criteria to each of the received bids **40** according to the predetermined optimization function. Selection criteria may be based on the bid amount, the number of desired impressions/views, the set of wireless device-based transient factors, the priority status of the bidder and the like. Additionally, the advertising bidding module **36** on the wireless device **26** may include bid selector **48** operable to select one or more bids based on the selection criteria. The advertising bidding module **36** also includes selected bid storage operable to store a selected bid record for each bid that is selected for providing advertising to wireless device **26**.

Wireless device **26** may additionally include an advertisement cache **52** operable for storing advertisements that may be selected for presentation based on acceptance of a bid from an advertisement provider. Optionally, the wireless device may communicate with a network source to retrieve advertisements associated with an accepted bid or, in the instance in which the device is configured to receive broadcast/multicast communication, the wireless device may tune to an advertisement channel associated with an accepted bid advertisement provider.

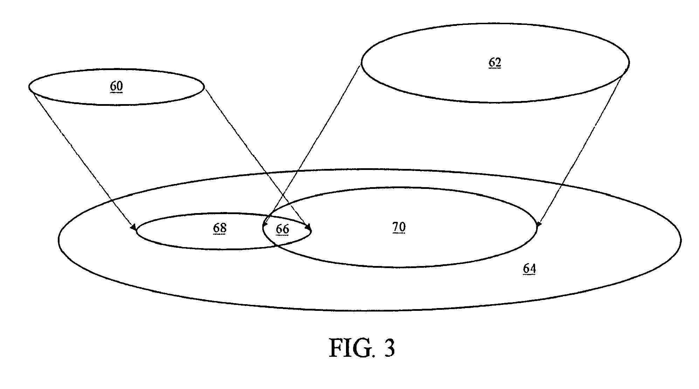

Fig. 3 provides a schematic diagram that illustrates an example of how biddable advertising may be determined, according to one aspect. A first advertising provider defines first wireless device-based transient factors **60**. For example, the first advertising provider may define the first wireless device-based transient factors as a specific geographic area, a specific time period, such as a specific time of day or user related transient factors, such as a specific temporal user interest, a specific temporal demographic grouping or the like. For the purpose of the illustrated example, assume that the first wireless device-based transient factor is wireless devices geographically located in Riverside County and Imperial County. A second advertising provider defines second wireless device-based transient factors **62**. For the purpose of the illustrated example, the second wireless device-based transient factor is wireless device geographically located in San Diego County and Imperial County. Each advertising provider provides the bidding system with a bid, which includes the selected and/or identified wireless device-based transient factors and a bid limit.

At the auction system level, the service provider or other bidding system providing entity compares the wireless device-based transient factors. In the illustrated example of Fig. 3, the auction system applies the bidding constraints to the overall population **64** of wireless devices. For the purpose of the illustrated example, the overall population **64** reflects all of the wireless devices in the network or in a specified geographic area, such as the State of California as designated by the system or by the bids. The intersection region **66** of the first and second wireless device-based transient factors **60**, **62** defines biddable advertising that will be assigned to the advertising provider according to the selection criteria of an associated predetermined optimization function. In the illustrated example, the intersection region **66** is defined as wireless devices in Imperial County. The non-intersecting portions **68, 70** of respective wireless device-based transient factors **60, 62** provide for advertising that may be allocated based on the bid received, a fixed price or any other known pricing scheme. Thus, for the illustrated example, non-intersecting portion **68** reflects a wireless device-based transient factor of devices located in Riverside County and non-intersecting portion **70** reflects a wireless device-based transient factor of devices located in San Diego County. In the instance in which no other advertising provider submits a bid having a wireless device-based transient factor of devices located in Riverside and/or San Diego County, the right to provide advertising to the wireless devices located in these regions may be allocated using the received bid amount, a fixed price scheme or some other bidding allocation scheme.

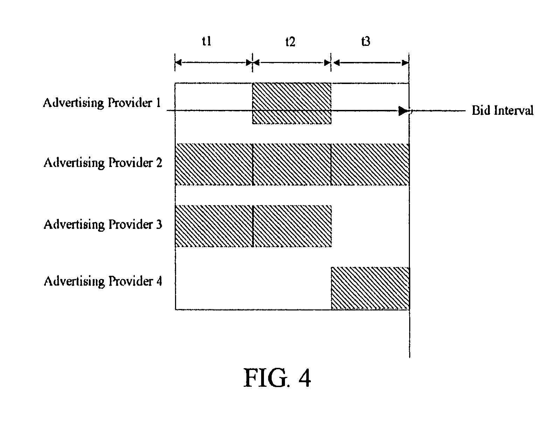

Fig. 4 provides an example of an optimization function that applies selection criteria to determine one or more acceptable bids, according to one aspect. In the illustrated example, four different advertising providers have provided bids. Each advertising provider desires to advertise on the wireless device at different time intervals.

In the illustrated example of Fig. 4, three consecutive time periods t₁, t₂, and t₃ are defined, such that advertising provider 1 desires access to the second time period, advertising provider 2 desires access for all three time periods, advertising provider 3 desires access for the first two time periods and advertising provider 4 desires access for the third time period. For the purpose of the illustrated example, assume that the advertising providers are bidder for the time slots for a predetermined group of wireless devices having equivalent defined wireless device-based transient factors. For example, all the wireless devices location in San Diego, California during the three consecutive time periods t₁, t₂, and t₃. Additionally, assume that advertising provider I provides a maximum auction bid of 510,000 for the second time period, advertising provider 2 provides a maximum auction bid of S5,000 for each of the three time periods, advertising provider 3 provides a maximum auction bid of S3,000 for each of the first two time periods and advertising provider 4 provides a maximum bid of S8,000 for the third time period. The optimization routine may determine which bid provides the bidding system provider with the highest overall profit for the predefined cumulative time period. For example, the service provider may accrue S10,000 (1 x S10,000) if advertising provider 1 is determined to be the selected bidder, S15,000 (3 x S5,000) if advertising provider 2 is determined to be the selected bidder, S6,000 (2 x S3,000) if advertising provider 3 is determined to be the selected bidder and S8,000 (1 x S8,000) if advertising provider 4 is determined to be the selected bidder. Thus, the optimization function may optimize the bids over a predetermined time interval to provide bid optimization and, in the example of Fig. 4, this would result in advertising provider 2 being deemed the selected bidder based on the highest overall profit for the predefined time interval (t₁ - t₃). In some aspects, for each bid, the optimization routine may further include bid limit, fixed fee or other non-bidding income associated with each time period not having multiple bids, but within the time interval of the optimization, e.g., t₁ and t₃ with respect to the bid advertising provider 1.

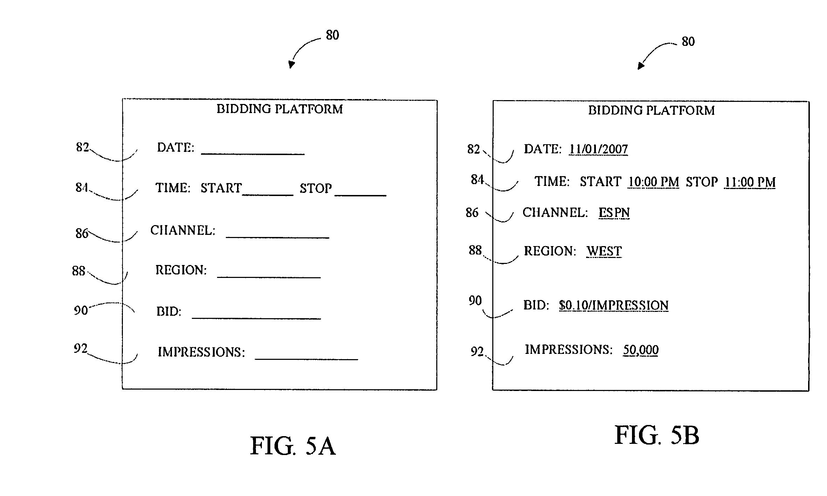

Referring to Figs. 5A and 5B, shown are examples of network based bidding platforms for presenting bid input information to advertising providers, according to one aspect. More specifically, Fig. 5A illustrates an example of a bidding platform prior to the advertising provider input of selectable wireless device-based transient factors. It should be noted that the transient factors illustrated in Fig. 5A are by way of example only. As such, transient factors may include, but are not limited to, wireless device configuration, wireless device location, predicted future wireless device location, time of day, time of week, time of month, time of year, application being executed, service being accessed, temporal user demographics, temporal user profile, and/or temporal user inferences.

In the illustrated example of Fig. 5A the advertising provider is provided with a bidding platform **80** that provides for the input of all of wireless device-based transient factors associated with audience that the advertising provider desires to target. In the illustrated aspect, the bidding platform **80** includes a date field **82**, a time field **84**, including a start time and a stop time, and a channel field **86**. The date field **82**, time field **84** and channel field **86** allow the advertising provider to choose the date, time and broadcast/multicast channel, respectively, targeted for advertising.

The bidding platform **80** also includes a region field **88** that allows the advertising provider to define the geographic region targeted for advertising. As such, if the advertising provider selects a region, the bid they are submitting, if accepted, will only result in providing advertising to those wireless devices located in the region on the specified date and time, which are viewing the specified channel. The geographic region may be defined according to bidding system configuration. For example, the geographic region may be any definable geographic region, including, but not limited to, a country, a region of a country (for example, east, west, southeast, etc.), a region of a state (for example, a county or parish), a city, a street, an area defined by streets, a geographic region defined by a cellular base station range or access point range or the like. While the bidding platform **80** of Fig. 5A is limited to wireless device-based transient factors, such as specific time/date/channel and specific location, it should be clear that the bidding platform may additionally include any other suitable wireless device-based transient factor.

The bidding platform **80** additionally includes a bid field **90** and an impression field **92**. The bid field **90** allows the advertising provider to input the bid amount. Depending on system configuration, the bid amount may be a price per impression, an overall price that the advertising provider is willing to pay for advertising provided at the desired date/time or another feasible bid amount/mechanism. The impression field **92** allows the advertising provider to input the maximum number of impressions/views that they desire to target for the defined wireless-device-based transient factors. An impression may be defined as a single execution of the advertisement on a wireless device.

Fig. 5B corresponds to Fig. 5A and illustrates an example of the bidding platform **80** having data fields inputted by the advertising provider. In other words, Fig. 5B is illustrative of a bid being placed by an advertising provider. The bidding platform **80** includes date field **82**, which indicates the advertising provider's desire to provide advertising on a date of November 01, 2007, a time field **84**, which indicates the advertising provider's desire to provide advertising between 10:00 PM and 11:00 PM and a channel field **86**, which indicates the advertising provider's desire to provide advertising on the broadcast channel designated as "ESPN".

The bidding platform **80** also includes region field **88**, which indicates the advertising provider's desire to provide advertising to only those wireless devices geographically located in the region defined as "west" during the specified time and date and while viewing the specified channel.

Additionally, the bidding platform **80** also includes bid field **90**, which indicates that the advertising provider is willing to pay S0.10 for each impression/view of their advertisement and impression field 92, which indicates that the advertising provider is willing to pay for up to 10,000 impressions of the advertisement. It should be noted, that if the bid is selected by the bidding system such that advertising provider is authorized to provide advertising content per the defined wireless device-based transient factors, in some instances the maximum number of impressions may not occur during the defined time/date. For example, less than 10,000 wireless devices may be located in the "west" region on November 1, 2007 between 10:00 PM and 11:00PM, which are viewing the "ESPN" channel. In which case, the number of impressions that are made will be equivalent to the total number of wireless devices located in the "west" region on November 1, 2007 between 10:00 PM and 11:00PM, which are viewing the "ESPN" channel.

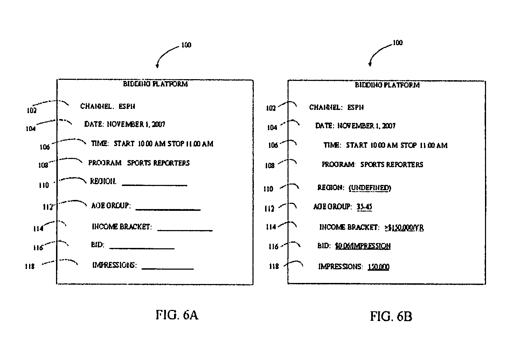

Referring to Figs. 6A and 6B, shown are additional examples of network based bidding platforms for presenting bid input information to advertising providers, according to another aspect. More specifically, Fig. 6A illustrates an example of a bidding platform prior to the advertising provider input of selectable wireless device-based transient factors and, optional wireless device-based non-transient factors. In the example of Fig. 6A the bidding system has defined the channel, the date, the time and the program that is broadcasted on this channel at the prescribed date and time. As such bidding platform **100** may include channel field **102**, which indicates that the advertising provider is bidding on providing advertising for the "ESPN" channel"; date field **104**, which indicates that the advertising provider is bidding on providing advertising on November 1, 2007; time field **106** which indicates that the advertising provider is bidding on providing content between 10:00 AM and 11:00 AM; and program field **108**, which indicates that the advertising provider is bidding on providing advertising for the program entitled "Sports Reporters", which is broadcasted on November 1, 2007 between 10:00 AM and 11:00 AM on the ESPN channel.

Additionally, the bidding platform **100** provides for the advertising provider to input one or more wireless device-based transient factors associated with the bid and, optionally one or more wireless device-based non-transient factors. As such, the bidding platform **100** may include transient factor fields, such as region field **110**, that allows the advertising provider to define the geographic region for advertising. As such, advertisements provided for by the advertising provider may only be presented on wireless devices located in the specified region during the specified time/data and while viewing the specified channel/program.

The bidding platform **100** may additionally include one or more optional non-transient fields such as user demographics or the like. For example, Fig. 6A includes age group field **112**, which that allows the advertising provider to define the specific age group of wireless device users targeted for advertising and income range field **114**, which allows the advertising provider to define the income range of the wireless device users targeted for advertising.

The bidding platform **80** additionally includes a bid field 90 and an impression field **92**. The bid field **90** allows the advertising provider to input the bid amount. The impression field **92** allows the advertising provider to input the maximum number of impressions/views that they desire to target for the defined wireless-device-based transient factors.

Fig. 6B corresponds to Fig. 6A and illustrates an example of the bidding platform **100** having data fields inputted by the advertising provider. In other words, Fig. 6B is illustrative of a bid being placed by an advertising provider. The bidding platform **100** includes transient factor fields, such as region field **110**, which is undefined. An undefined entry in the bidding platform indicates that the advertising provider has no preference for that particular field. Thus, in the illustrated example, the undefined region field **110** indicates the advertising provider's desire to provide advertising regardless of the geographic location of the wireless device. The bidding platform additionally includes non-transient factor fields, such as age group field **112**, which indicates the advertising provider's desire to provide advertising to wireless device users in the 35 - 45 age group range and income range field **114**, which indicates the advertising provider's desire to provide advertising to wireless device users having an annual income greater than S150,000.

Additionally, the bidding platform **100** also includes bid field **116**, which indicates that the advertising provider is willing to pay S0.06 for each impression/view of their advertisement and impression field **118**, which indicates that the advertising provider is willing to pay for up to 150,000 impressions of the advertisement.

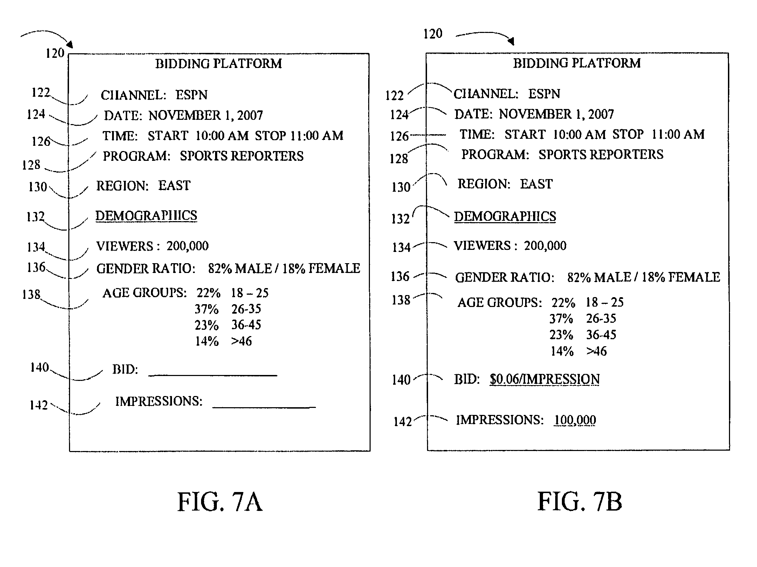

Referring to Figs. 7A and 7B, shown are additional examples of network based bidding platforms for presenting bid input information to advertising providers, according to another aspect. More specifically, Fig. 7A illustrates an example of a bidding platform prior to the advertising provider a bid input. In the illustrated example, historical wireless device-based transient factor and non-transient data is presented for specified channel/program broadcasted at a specified time and date. The advertising provider inputs a bid for providing advertising for the specified channel/program at the specified date/time based on the acknowledgement of historical wireless device- transient factors that aligned with the content providers target audience. In the example of Fig. 7A the bidding system has defined the channel, the date, the time and the program that is broadcasted on this channel at the prescribed date and time. As such bidding platform **120** may include channel field **122**, which indicates that the advertising provider is bidding on providing advertising for the "ESPN" channel"; date field **124**, which indicates that the advertising provider is bidding on providing advertising on November 1, 2007; time field **126** which indicates that the advertising provider is bidding on providing content between 10:00 AM and 11:00 AM; program field **128**, which indicates that the advertising provider is bidding on providing advertising for the program entitled "Sports Reporters", which is broadcasted on November 1, 2007 between 10:00 AM and 11:00 AM on the ESPN channel and region field **130**, which indicates that the advertising provider is bidding on providing advertising for the "east" region.

The bidding platform **120** additionally includes demographics data **132**, which provides for a listing of historical data related to wireless device-based transient factors and, optional, non-transient factors. For example, demographics data **132** may include a viewers field **134**, which indicates the historical average number of wireless device viewers for the specified channel and program. In this example, the average number of wireless device viewers is 200,000. The demographics data **132** may additionally include a gender ratio field **136**, which indicates the historical ratio of male viewers to female viewers. In this example, 82% of the viewers are historically male and 18% of the viewers are historically female. Additionally, the demographics data **132** may include age group data **138**, which indicates the historical breakdown of viewers by age category. In the illustrated example, 22% are 18-25, 37% are 26-35, 23% are 36-45 and 14% are 46 or older.

The bidding platform **120** additionally includes a bid field **140** and an impression field **142**. The bid field **140** allows the advertising provider to input the bid amount that the advertising provider desires to bid for advertising on the specified program/channel at the specified time/date. The impression field **142** allows the advertising provider to input the maximum number of impressions/views that they desire to target for advertising on the specified program/channel at the specified time/date.

Fig. 7B corresponds to Fig. 7A and illustrates an example of the bidding platform **120** having the bid field **140** and the impression field **142** inputted by the advertising provider. In other words, Fig. 7B is illustrative of a bid being placed by an advertising provider. Thus, the bidding platform **120** includes bid field **120**, which indicates that the advertising provider is willing to pay S0.06 for each impression/view of their advertisement and impression field **92**, which indicates that the advertising provider is willing to pay for up to 100,000 impressions of the advertisement.

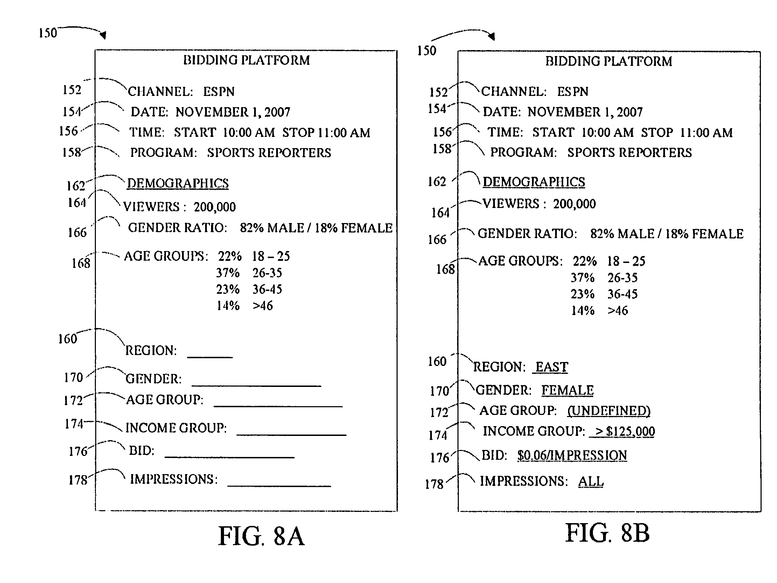

Referring to Figs. 8A and 8B, shown are examples of network based bidding platforms for presenting bid input information to advertising providers, according to one aspect. More specifically, Fig. 8A illustrates an example of a bidding platform prior to the advertising provider input of selectable wireless device-based transient factors and non-transient factors. In the illustrated example, historical wireless device-based transient factor data is presented for specified channel/program broadcasted at a specified time and date. Additionally, the advertising provider is able to define one or more wireless device-based transient factors and, optional non-transient factors and input a bid for providing advertising for the specified channel/program at the specified date/time based on the defined wireless device-based transient factors and, optional non-transient factors.

In the example of Fig. 8A the bidding platform **150** has defined the channel, the date, the time and the program that is broadcasted on this channel at the prescribed date and time. As such bidding platform **150** may include channel field **152**, which indicates that the advertising provider is bidding on providing advertising for the "ESPN" channel"; date field **154**, which indicates that the advertising provider is bidding on providing advertising on November 1, 2007; time field **156** which indicates that the advertising provider is bidding on providing content between 10:00 AM and 11:00 AM; program field **158**, which indicates that the advertising provider is bidding on providing advertising for the program entitled "Sports Reporters", which is broadcasted on November 1, 2007 between 10:00 AM and 11:00 AM on the ESPN channel.

The bidding platform **150** additionally includes demographics data **162,** which provides for a listing of historical data related to wireless device-based transient and, optional non-transient factors. For example, demographics data **162** may include a viewers field **164**, which indicates the historical average number of wireless device viewers for the specified channel and program. In this example, the average number of wireless device viewers is 200,000. The demographics data **162** may additionally include a gender ratio field **166**, which indicates the historical ratio of male viewers to female viewers. In this example, 82% of the viewers are historically male and 18% of the viewers are historically female. Additionally, the demographics data **162** may include age group data **168**, which indicates the historical breakdown of viewers by age category. In the illustrated example, 22% are 18-25, 37% are 26-35, 23% are 36-45 and 14% are 46 or older.

Additionally, the bidding platform **150** provides for the advertising provider to input one or more wireless device-based transient factors and, optionally non-transient factors associated with the bid. As such, the bidding platform **150** may include transient factor region field **160**, which provides for the advertising provider to define the geographic region for which advertising will be provider on the indicated date/time for the indicated channel/program. The bidding platform **150** may additionally include non-transient factor gender field **170**, which allows the advertising provider to define the gender of the user of the wireless device targeted for advertising; non-transient age group field **172**, which allows the advertising provider to define the specific age group of wireless device users targeted for advertising; and non-transient income range field **174**, which allows the advertising provider to define the income range of the wireless device users targeted for advertising. The bidding platform **150** additionally includes a bid field **176** and an impression field **178**. The bid field **176** allows the advertising provider to input the bid amount that the advertising provider desires to bid for advertising on the specified program/channel at the specified time/date. The impression field **178** allows the advertising provider to input the maximum number of impressions/views that they desire to target for advertising on the specified program/channel at the specified time/date.

Fig. 8B corresponds to Fig. 8A and illustrates an example of the bidding platform **150** having data fields inputted by the advertising provider. In other words, Fig. 8B is illustrative of a bid being placed by an advertising provider. The bidding platform includes transient factor region field **160**, which indicates the advertising provider's desire to advertise in the "east" region. The bidding platform **150** includes non-transient factor gender field **110**, which indicates the advertising provider's desire to provide advertising to females. The bidding platform additionally includes non-transient age group field **112**, which is undefined. The undefined entry in the bidding platform **150** indicates that the advertising provider has no preference for that particular field. Thus, the advertising provider is bidding on providing advertising to wireless device users of any age. The bidding platform **150** non-transient income range field 114, which indicates the advertising provider's desire to provide advertising to wireless device users having an annual income greater than S125,000.

Additionally, the bidding platform **100** also includes bid field **116**, which indicates that the advertising provider is willing to pay S0.06 for each impression/view of their advertisement and impression field **118**, which indicates that the advertising provider is willing to pay for as many impression/views as meet the defined wireless device-based transient factors.

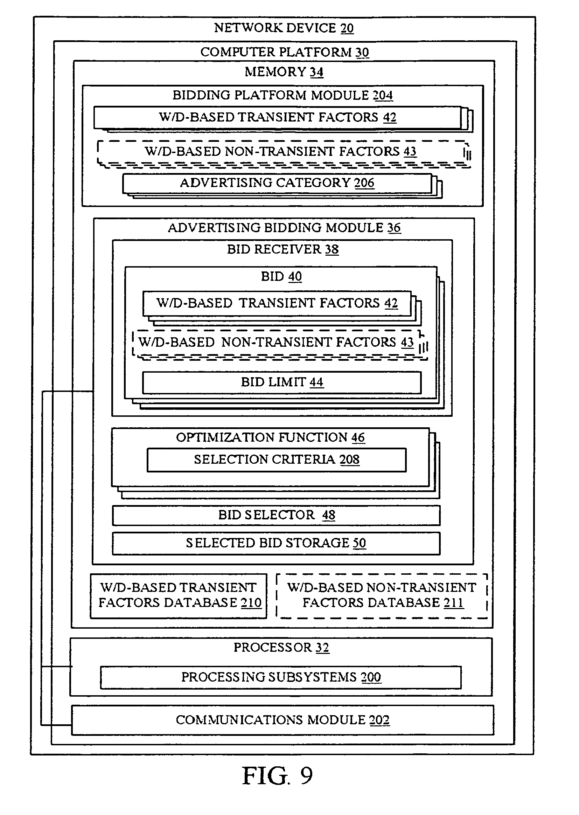

Referring to Fig. 9, according to another aspect, a detailed block diagram is illustrated of a network device for providing a multidimensional bidding marketplace for wireless device advertising, according to another aspect. The network device **20** may comprise at least one of any type of hardware, server, personal computer, mini computer, mainframe computer, or any computing device either special purpose or general computing device. Further, the modules and applications described herein as being operated on or executed by the network device **20** may be executed entirely on the network device **20** or alternatively, in other aspects, separate servers or computer devices may work in concert to provide data in usable formats to parties, and/or to provide a separate layer of control in the data flow between the computing devices **24**, wireless devices **26** and the modules and applications executed by network device **20**.

The network device **20** includes computer platform **30** that can transmit and receive data across a wired or wireless network, and that can execute routines and applications. Computer platform **30** includes a memory **34**, which may comprise volatile and nonvolatile memory such as read-only and/or random-access memory (RAM and ROM), EPROM, EEPROM, flash cards, or any memory common to computer platforms. Further, memory **34** may include one or more flash memory cells, or may be any secondary or tertiary storage device, such as magnetic media, optical media, tape, or soft or hard disk.

Further, computer platform **30** also includes a processor **32**, which may be an application-specific integrated circuit (ASIC), or other chipset, logic circuit, or other data processing device. Processor **32** includes various processing subsystems **200** embodied in hardware, firmware, software, and combinations thereof, that enable the functionality of network device **20** and the operability of the network device on a wired and/or wireless network. For example, processing subsystems **200** may allow for initiating and maintaining communications, and exchanging data, with other networked devices. For the disclosed aspects, processing subsystems **80** of processor **32** may include any subsystem components that interact with the advertising bidding module 36.

The computer platform **48** further includes a communications module **202** embodied in hardware, firmware, software, and combinations thereof, that enables communications among the various components of network device **20**, as well as between the network device **20**, and computing devices **24**. The communication module **202** may include the requisite hardware, firmware, software and/or combinations thereof for establishing a wireless communication connection. The communication module **202** is operable to receive bids from computing devices **26**.

The memory **34** of network device **20** also may include a bidding platform module **204** operable to provide the advertising providers a network interface for initiating advertising bidding. In this regard, the bidding platform module **204** may be operable to present advertising providers with a plurality of wireless device-based transient factors **42** and, optionally, one or more wireless device-based non-transient factors **43**. The transient factors may include, but are not limited to, wireless device configuration, wireless device location, predicted future wireless device location, time of day, time of week, time of month, time of year, application being executed, service being accessed, temporal user demographics, temporal user profile, and/or temporal user inferences. The non-transient factors may include, but are not limited to, wireless device type/model, user profile, user demographics, user usage history and the like. Additionally, the bidding platform module **204** may be operable to present one or more advertising categories **206** associated with the wireless device-based transient factors **42** and, optional wireless device non-transient factors **43.** For example, the advertising categories may include, but are not limited to, a broadcast/multicast date, a broadcast/multicast time, a broadcast/multicast channel, a broadcast/multicast program, a network service, a network application and the like.

The memory **34** of network device **20** also includes an advertising bidding module **36** operable to receive bids and determine acceptable bids. The advertising bidding auction module 36 includes a bid receiver **38** operable to receive, from the advertising providers **12**, a bid **40** based on one or more of a plurality of wireless device-based transient factors **42** and, optionally, non-transient factors **43** and including a bid limit **44**. The bid limit may be defined as a specified price for a specified number of advertising impressions/views.

The advertising bidding module **36** additionally includes one or more optimization functions **46** operable to apply selection criteria **208** to each of the received bids **40** according to the predetermined optimization function. Selection criteria **208** may be based on the bid amount, the number of desired impressions/views, the set of wireless device-based transient factors, the, optional, one or more wireless device-based non-transient factors, the priority status of the bidder and the like. Additionally, the advertising bidding module **36** may include bid selector **48** operable to select one or more bids based on the selection criteria. As previously noted, the system may provide for selecting multiple bids for the same advertising category, such as the same time/date, the same channel/program or the like in order to maximize profits. The advertising bidding module **36** also includes selected bid storage operable to store a selected bid record for each bid that is selected for providing advertising to wireless devices.

Additionally the memory **34** of network device **20** may include a wireless device-based transient factor database **210** operable collecting and storing transient factors related to the wireless devices and/or the wireless device users. The wireless device-based transient factor database **210** may be relied upon, once a bid has been accepted, to insure that the advertising is provided to the wireless device in accordance with the prescribed wireless device transient factors defined in the accepted bid. Thus, the data that is stored in database **210** may be highly dynamic in nature, such as the current location of the wireless device and/or relatively static data, such as user-profiled data. The memory **34** of network device **20** may additionally include a wireless device non-transient factor database **211** operable for collecting and storing non-transient factors related to the wireless devices and/or the wireless device users.

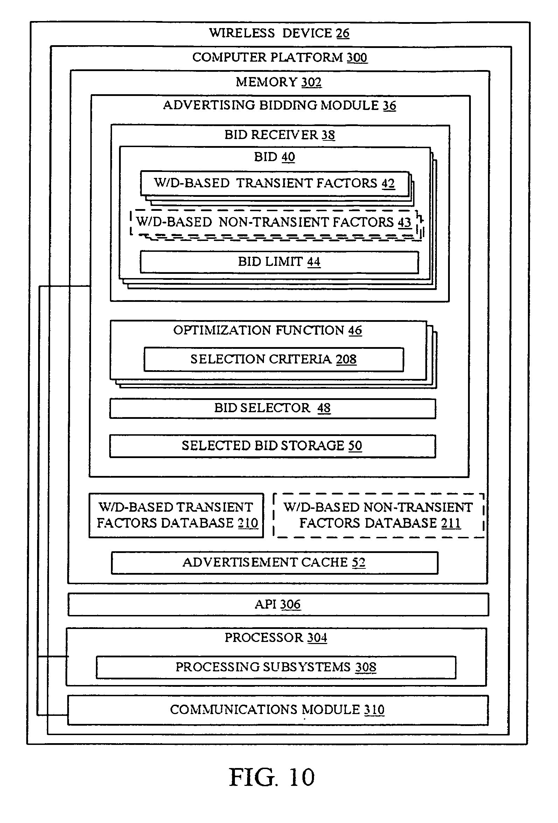

Referring to Fig. 10, according to one aspect, a detailed block diagram representation of wireless communication device **26** is depicted. The wireless communication device **26** may include any type of computerized, communication device, such as cellular telephone, Personal Digital Assistant (PDA), two-way text pager, portable computer, and even a separate computer platform that has a wireless communications portal, and which also may have a wired connection to a network or the Internet. The wireless communication device can be a remote-slave, or other device that does not have an end-user thereof but simply communicates data across the wireless network, such as remote sensors, diagnostic tools, data relays, and the like. The present apparatus and methods can accordingly be performed on any form of wireless communication device or wireless computer module, including a wireless communication portal, including without limitation, wireless modems, PCMCIA cards, access terminals, desktop computers or any combination or sub-combination thereof.

The wireless communication device **26** includes computer platform **300** that can transmit data across a wireless network, and that can receive and execute routines and applications. Computer platform **300** includes memory **302**, which may comprise volatile and nonvolatile memory such as read-only and/or random-access memory (RAM and ROM), EPROM, EEPROM, flash cards, or any memory common to computer platforms. Further, memory **302** may include one or more flash memory cells, or may be any secondary or tertiary storage device, such as magnetic media, optical media, tape, or soft or hard disk.

Further, computer platform **300** also includes processor **304**, which may be an application-specific integrated circuit ("ASIC"), or other chipset, processor, logic circuit, or other data processing device. Processor **304** or other processor such as ASIC may execute an application programming interface ("API") layer **306** that interfaces with any resident programs, such as advertising bidding module **36**, stored in the memory **302** of the wireless device **26**. API **306** is typically a runtime environment executing on the respective wireless device. One such runtime environment is Binary Runtime Environment for Wireless^{®} (BREW^{®}) software developed by Qualcomm, Inc., of San Diego, California. Other runtime environments may be utilized that, for example, operate to control the execution of applications on wireless computing devices.

Processor **304** includes various processing subsystems **308** embodied in hardware, firmware, software, and combinations thereof, that enable the functionality of communication device **26** and the operability of the communication device on a wireless network. For example, processing subsystems **308** allow for initiating and maintaining communications, and exchanging data, with other networked devices. In aspects in which the communication device is defined as a cellular telephone the communications processor **304** may additionally include one or a combination of processing subsystems **308**, such as: sound, non-volatile memory, file system, transmit, receive, searcher, layer 1, layer 2, layer 3, main control, remote procedure, handset, power management, digital signal processor, messaging, call manager, Bluetooth^{®} system, Bluetooth^{®} LPOS, position engine, user interface, sleep, data services, security, authentication, USIM/SIM, voice services, graphics, USB, multimedia such as MPEG, GPRS, etc (all of which are not individually depicted in Fig. 2 for the sake of clarity). For the disclosed aspects, processing subsystems **308** of processor **304** may include any subsystem components that interact with the advertising bidding module **36**.

Computer platform **300** additionally includes communications module **310** embodied in hardware, firmware, software, and combinations thereof, that enables communications among the various components of the wireless communication device **26**, as well as between the wireless device **26** and one or more wireless networks. In described aspects, the communication module **310** enables the receipt of all bids for providing advertising content on wireless device **26**.

The memory **302** of computer platform **304** may include an advertising bidding module **36** operable to receive bids and determine acceptable bids. The advertising bidding auction module **36** includes a bid receiver **38** operable to receive, from the advertising providers **12**, one or more bids **40** based on one or more of a plurality of wireless device-based transient factors **42** and, optionally, non-transient factors 43 and including a bid limit **44**. The bid limit may be defined as a specified price for a specified number of advertising impressions/views.

The advertising bidding module **36** additionally includes one or more optimization functions **46** operable to apply selection criteria **208** to each of the received bids **40** according to the predetermined optimization function. Selection criteria **208** may be based on the bid amount, the number of desired impressions/views, the set of wireless device-based transient factors, the, optional, one or more wireless device-based non-transient factors, the priority status of the bidder and the like. Additionally, the advertising bidding module **36** may include bid selector **48** operable to select one or more bids based on the selection criteria. The advertising bidding module **36** may also include selected bid storage **50** operable to store a selected bid record for each bid that is selected for providing advertising to wireless devices.

Additionally the memory **302** of wireless device **26** may include a wireless device-based transient factor database **210** operable collecting and storing transient factors related to the wireless device and/or the wireless device user. The wireless device-based transient factor database **210** may be relied upon, once a bid has been accepted, to insure that the advertising is provided to the wireless device in accordance with the prescribed wireless device transient factors defined in the accepted bid. Thus, the data that is stored in database **210** may be highly dynamic in nature, such as the current location of the wireless device. The memory **34** of network device **20** may additionally include a wireless device non-transient factor database **211** operable for collecting and storing non-transient factors related to the wireless devices and/or the wireless device users.

The memory **302** of wireless device **26** may additionally include advertisement cache 52 operable for storing advertisements that may be presented on the wireless device in conjunction with the selection, via the bidding process, of an advertisement provider associated with one or more of the cached advertisements. Alternatively, advertisements may be acquired from a network entity associated with the selected advertisement provider or, in the case of advertisements provided in conjunction with broadcast/multicast content, the advertisements associated with a selected advertisement provider may be presented by tuning the broadcast receiver to an appropriate advertisement channel.

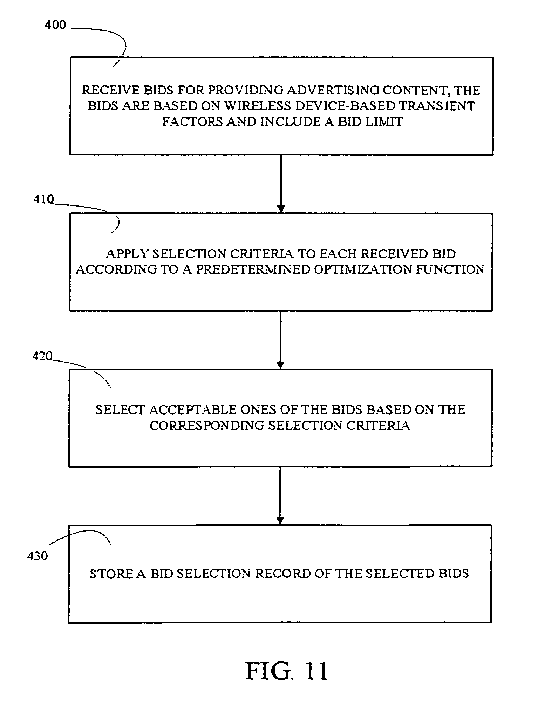

Fig. 11 is a flow diagram of a method for allocating advertising content on a wireless communication device. The method described in relation to Fig. 11 may be implemented at network device for the purpose of providing advertising content to a plurality of wireless devices or, in alternate aspects, the method may be implemented at a wireless device for the purpose of providing advertising content to the wireless device. At Event **400**, the system receives one or more bids for providing advertising content. The bids are based on at least one of a plurality of wireless device-based transient factors and include a bid limit. The transient factors, may include but are not limited to, wireless device configuration, wireless device location, predicted future wireless device location, time of day, time of week, time of month, time of year, application being executed, service being accessed, temporal user demographics, temporal user profile, and/or temporal user inferences. The bid limit may be defined as a specified price for a specified number of advertising impressions. In alternate aspects, the bid may be based on one or more non-transient factors. The non-transient factors may include, but are not limited to, wireless device type, wireless device model, user profile, user demographics, user usage history and the like.

In certain aspects, the received bid will associate the wireless device-based transient factors with one or more advertising categories, such as time, date, program, channel, application or the like. In such aspects, the advertising provider may select the wireless device-based transient factors that they desire for the one or more associated advertising categories. Alternatively, the advertising provider may select the wireless device-based transient factors, which may include selection of the one or more advertising categories. In other aspects, the advertising provider may select a bid limit based on historical data related to the wireless device-based transient factors associated with one or more advertising categories.

At Event **410,** the method applies selection criteria according to one or more predetermined optimization functions. The optimization functions and the associated selection criteria are generally implemented to maximize profits for the bidding system provider. At Event **420,** the method selects acceptable ones of the one or more bids based on the selection criteria. As previously noted, the method is not limited to selecting a single acceptable bidder and may provide for selecting more than one acceptable bidder based on variance, from bid-to-bid, in defined wireless device-based transient factors and/or advertising categories..

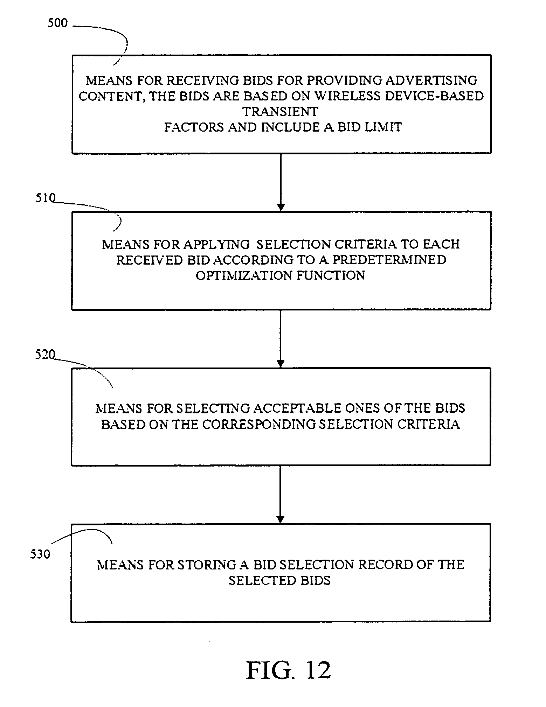

Fig. 12 is a flow diagram of means for receiving advertising bids from advertising providers and determining which bids to select, according to an aspect. The method of Fig. 11 discussed above may be performed by corresponding means plus function blocks illustrated in Fig. 12.

At Event **430**, the selected/accepted bids are stored in appropriate selected bid storage to indicate the selection/acceptance of the bid. The selected bid storage may reside at a network device or at one or more wireless devices. Optionally, the system may notify the bidder that their bid has been accepted and authorized for providing advertising content according to the defined wireless device-based transient factors and/or advertising categories.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, *e.g.,* a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal.
In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

Thus, present aspects provide systems, methods and apparatus for multidimensional marketplace for providing advertising content to wireless device. In particular the systems, methods and apparatus that allows advertising providers, to define and/or identify one or more wireless device-based transient factors, which serve to define a targeted advertising audience and to bid on advertising based on the selected or identified transient factors.

Many modifications and other aspects will come to mind to one skilled in the art to which this invention pertains having the benefit of the teachings presented in the foregoing descriptions and the associated drawings. Therefore, it is to be understood that the aspect is not to be limited to the specific aspects disclosed and that modifications and other aspects are intended to be included within the scope of the appended claims. Although specific terms are employed herein, they are used in a generic and descriptive sense only and not for purposes of limitation. Accordingly, the described aspects are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A method for allocating advertising content on a wireless communication device, comprising:
receiving one or more bids for providing advertising content to a plurality of wireless devices, wherein the bids are based on at least one of a plurality of wireless device-based transient factors and include a bid limit;
applying selection criteria according to a predetermined optimization function for each of the one or more bids;
selecting one or more acceptable bids based on the corresponding selection criteria; and
storing a bid selection record of the one or more selected bids.

2. The method of claim 1, wherein receiving one or more bids further comprises receiving one or more bids for providing advertising content to a plurality of wireless devices, wherein the bids are based on at least one of a plurality of wireless device-based transient factors comprising at least one of device configuration, device location, predicted future device location, time of day, time of week, time of month, time of year, application being executed, service being accessed, temporal user demographics, temporal user profile, or temporal user inferences.

3. The method of claim 1, wherein receiving one or more bids further comprises receiving one or more bids for providing advertising content to a plurality of wireless devices, wherein the bids include a bid limit defined as a specified price for a specified number of advertising impressions.

4. The method of claim 1, wherein receiving one or more bids further comprises receiving one or more bids for providing advertising content to a plurality of wireless devices, wherein the bids are based on the at least one of a plurality of wireless device-based transient factors, one or more wireless device-based non-transient factors and include the bid limit.

5. The method of claim 4, wherein receiving one or more bids further comprises receiving one or more bids for providing advertising content to a plurality of wireless devices, wherein the bids are based on the at least one of a plurality of wireless device-based transient factors, one or more wireless device-based non-transient factors and include the bid limit further defines the one or more wireless device non-transient factors is at least one of wireless device type, wireless device model, user profile, user demographics or user usage history.

6. The method of claim 1, further comprising providing a plurality of bidders a network platform that includes a plurality of wireless-device transient factors and provides for the bidders to input a bid for providing advertising content based on the plurality of wireless device-based transient factors.

7. The method of claim 6, wherein providing a plurality of bidders a network platform further comprises providing a plurality of bidders a network platform that includes a plurality of wireless-device transient factors and provides for the bidders to input a bid for providing advertising content based on bidder selection of at least one of the plurality of wireless device-based transient factors.

8. The method of claim 6, wherein providing a plurality of bidders a network platform further comprises providing a plurality of bidders a network platform that includes a plurality of wireless-device transient factors and provides for the bidders to input a bid for providing advertising content based on identifying at least one of the plurality of wireless device-based transient factors associated with at least one selectable advertising category.

9. The method of claim 8, wherein providing a plurality of bidders a network platform that includes a plurality of wireless-device transient factors and provides for the bidders to input a bid for providing advertising content based on identifying at least one of the plurality of wireless device-based transient factors associated with at least one selectable advertising category further defines the selectable advertising category as one of a predetermined time slot, a predetermined network service or a predetermined application.

10. The method of claim 1, wherein applying selection criteria according to a predetermined optimization function for each of the one or more bids further comprises optimizing each of the bids over a predetermined period of time to determine which ones of the one or more bids to accept.

11. The method of claim 1, wherein applying selection criteria according to a predetermined optimization function for each of the one or more bids further comprises optimizing each bid over at least one wireless device-based transient factor fields to determine which ones of the one or more bids to accept.

12. At least one processor configured to receive bids for providing advertising content to wireless devices, comprising:
a first module for receiving one or more bids for providing advertising content to a plurality of wireless devices, wherein the bids are based on at least one of a plurality device-based transient factors and include a bid limit;
a second module for applying selection criteria according to a predetermined optimization function for each of the one or more bids;
a third module for selecting one or more acceptable bids based on the corresponding selection criteria; and
a fourth module for storing a bid selection record of the one or more selected bids.

13. A computer program product, comprising:
a computer-readable medium comprising:
at least one instruction for causing a computer to receive one or more bids for providing advertising content to a plurality of wireless devices, wherein the bids are based on at least one of a plurality device-based transient factors and include a bid limit;
at least one instruction for causing the computer to apply selection criteria according to a predetermined optimization function for each of the one or more bids;
at least one instruction for causing the computer to select one or more acceptable bids based on the corresponding selection criteria; and
at least one instruction for causing the computer to store a bid selection record of the one or more selected bids.

14. An apparatus, comprising:
means for receiving one or more bids for providing advertising content to a plurality of wireless devices, wherein the bids are based on at least one of a plurality wireless device-based transient factors and include a bid limit;
means for applying selection criteria according to a predetermined optimization function for each of the one or more bids;
means for selecting one or more acceptable bids based on the corresponding selection criteria; and
means for storing a bid selection record of the one or more selected bids.

15. A network device for managing a biddable marketplace for advertising on a wireless communication device, comprising:
a computer platform including at least one processor and a memory; and
an advertising bidding module stored in the memory and executable by the at least one processor, wherein the advertising bidding module includes:
a bid receiver operable to receive one or more bids for providing advertising content to a plurality of wireless device, wherein the bids are based on at least one of a plurality wireless device-based transient factors and include a bid limit;
one or more optimization functions operable to apply selection criteria to each of the one or more bids;
a bid selector operable to select one or more acceptable bids based on the corresponding selection criteria, and
a selected bid storage operable to store a bid selection record of the one or more selected bids.

16. The network device of claim 15, wherein the bid receiver is further operable to receive one or more bids for providing advertising content to a plurality of wireless devices, wherein the bids are based on at least one of the plurality of wireless device-based transient factors comprising at least one of device configuration, device location, predicted future device location, time of day, time of week, time of month, time of year, application being executed, service being accessed, temporal user demographics, temporal user profile, or temporal user inferences.

17. The network device of claim 15, wherein the bid receiver is further operable to receive one or more bids for providing advertising content to a plurality of wireless devices, wherein the bids are based on at least one of the plurality of wireless device-based transient factors and one or more wireless device-based non-transient factors.

18. The network device of claim 17, wherein the bid receiver is further operable to receive one or more bids for providing advertising content to a plurality of wireless devices, wherein the bids are based on at least one of the plurality of wireless device-based transient factors and one or more wireless device-based non-transient factors, wherein the non-transient factors comprise at least one of wireless device type, wireless device model, user profile, user demographics, or user usage history.

19. The network device of claim 15, wherein the bid receiver is further operable to receive one or more bids for providing advertising content to a plurality of wireless devices, wherein the bids include a bid limit defined as a specified price for a specified number of advertising impressions.

20. The network device of claim 15, further comprising a bidding platform module stored in the memory and executable by the processor, wherein the bidding platform module is operable to provide a bidding platform for bidder selection of at least one of the plurality device-based transient factors and input of the bid limit.

21. The network device of claim 15, further comprising a bidding platform module stored in the memory and executable by the processor, wherein the bidding platform module is operable to provide a bidding platform that provides for identification of at least one of the plurality of wireless device-based transient factors associated with at least one selectable advertising category.

22. The network device of claim 21, wherein the bidding platform module operable to provide a bidding platform that provides for identification of at least one of the plurality of wireless device-based transient factors associated with at least one selectable advertising category further defines the selectable advertising category as at least one of a predetermined time slot, a predetermined network service or a predetermined application.

23. The network device of claim 15, wherein the one or more optimization functions are further operable to optimize each of the bids over a predetermined period of time to determine which ones of the one or more bids to accept.

24. The network device of claim 15, wherein the one or more optimization functions are further operable to optimize each bid over at least one of the plurality of wireless device-based transient factor fields to determine which ones of the one or more bids to accept.

25. A method for allocating advertising content on a wireless communication device, comprising:
receiving, at a wireless device, one or more bids for providing advertising content to the wireless devices, wherein the bids are based on at least one of a plurality of transient factors associated with the wireless device and include a bid limit;
applying, at the wireless device, selection criteria according to a predetermined optimization function for each of the one or more bids;
selecting, at the wireless device, one or more acceptable bids based on the corresponding selection criteria; and
storing, at the wireless device, a bid selection record of the one or more selected bids.

26. The method of claim 25, wherein receiving, at the wireless device, one or more bids further comprises receiving, at the wireless device, one or more bids for providing advertising content, wherein the bids are based on at least one of a plurality of wireless device-based transient factors comprising at least one of device configuration, device location, predicted future device location, time of day, time of week, time of month, time of year, application being executed, service being accessed, temporal user demographics, temporal user profile, or temporal user inferences.

27. The method of claim 25, wherein receiving, at the wireless device, one or more bids further comprises receiving, at the wireless device, one or more bids for providing advertising content, wherein the bids include a bid limit defined as a specified price for a specified number of advertising impressions.

28. The method of claim 25, wherein receiving, at the wireless device, one or more bids further comprises receiving, at the wireless device, one or more bids for providing advertising content, wherein the bids are based on the at least one of a plurality of wireless device-based transient factors, one or more wireless device-based non-transient factors and include the bid limit.

29. The method of claim 25, wherein receiving, at the wireless device, one or more bids further comprises receiving, at the wireless device, one or more bids for providing advertising content to a plurality of wireless devices, wherein the bids are based on the at least one of a plurality of wireless device-based transient factors, one or more wireless device-based non-transient factors and include the bid limit further defines the one or more wireless device non-transient factors is at least one of wireless device type, wireless device model, user profile, user demographics or user usage history.

30. The method of claim 25, wherein applying, at the wireless device, selection criteria according to a predetermined optimization function for each of the one or more bids further comprises optimizing each of the bids over a predetermined period of time to determine which ones of the one or more bids to accept.

31. The method of claim 25, wherein applying, at the wireless device, selection criteria according to a predetermined optimization function for each of the one or more bids further comprises optimizing each bid over at least one wireless device-based transient factor fields to determine which ones of the one or more bids to accept.

32. At least one processor implemented at a wireless device and configured to receive bids for providing advertising content to the wireless devices, comprising:
a first module for receiving one or more bids for providing advertising content to the wireless device, wherein the bids are based on at least one of a plurality device-based transient factors and include a bid limit;
a second module for applying selection criteria according to a predetermined optimization function for each of the one or more bids;
a third module for selecting one or more acceptable bids based on the corresponding selection criteria; and
a fourth module for storing a bid selection record of the one or more selected bids.

33. A computer program product, comprising:
a computer-readable medium comprising:
at least one instruction for causing a computer to receive, at a wireless device, one or more bids for providing advertising content to the wireless device, wherein the bids are based on at least one of a plurality device-based transient factors and include a bid limit;
at least one instruction for causing the computer to apply, at the wireless device, selection criteria according to a predetermined optimization function for each of the one or more bids;
at least one instruction for causing the computer to select, at the wireless device, one or more acceptable bids based on the corresponding selection criteria; and
at least one instruction for causing the computer to store a bid selection record of the one or more selected bids.

34. A wireless device apparatus, comprising:
means for receiving, at the wireless device, one or more bids for providing advertising content to the wireless device apparatus, wherein the bids are based on at least one of a plurality wireless device-based transient factors and include a bid limit;
means for applying, at the wireless device, selection criteria according to a predetermined optimization function for each of the one or more bids;
means for selecting, at the wireless device, one or more acceptable bids based on the corresponding selection criteria; and
means for storing, at the wireless device, a bid selection record of the one or more selected bids.

35. A wireless device for implementing a biddable marketplace for advertising on a wireless communication device, comprising:
a computer platform including at least one processor and a memory; and
an advertising bidding module stored in the memory and executable by the at least one processor, wherein the advertising bidding module includes:
a bid receiver operable to receive one or more bids for providing advertising content for the wireless device, wherein the bids are based on at least one of a plurality wireless device-based transient factors and include a bid limit;
one or more optimization functions operable to apply selection criteria to each of the one or more bids;
a bid selector operable to select one or more acceptable bids based on the corresponding selection criteria, and
a selected bid storage operable to store a bid selection record of the one or more selected bids.

36. The wireless device of claim 35, wherein the bid receiver is further operable to receive one or more bids for providing advertising content for the wireless device, wherein the bids are based on at least one of the plurality of wireless device-based transient factors comprising at least one of device configuration, device location, predicted future device location, time of day, time of week, time of month, time of year, application being executed, service being accessed, temporal user demographics, temporal user profile, or temporal user inferences.

37. The wireless device of claim 35, wherein the bid receiver is further operable to receive one or more bids for providing advertising content for the wireless device, wherein the bids are based on at least one of the plurality of wireless device-based transient factors and one or more wireless device-based non-transient factors.

38. The wireless device of claim 37, wherein the bid receiver is further operable to receive one or more bids for providing advertising content for the wireless device, wherein the bids are based on at least one of the plurality of wireless device-based transient factors and one or more wireless device-based non-transient factors, wherein the non-transient factors comprise at least one of wireless device type, wireless device model, user profile, user demographics, or user usage history.

39. The wireless device of claim 35, wherein the bid receiver is further operable to receive one or more bids for providing advertising content to a plurality of wireless devices, wherein the bids include a bid limit defined as a specified price for a specified number of advertising impressions.

40. The wireless device of claim 35, wherein the one or more optimization functions are further operable to optimize each of the bids over a predetermined period of time to determine which ones of the one or more bids to accept.

41. The wireless device of claim 35, wherein the one or more optimization functions are further operable to optimize each bid over at least one of the plurality of wireless device-based transient factor fields to determine which ones of the one or more bids to accept.
